# FASCICULE DE BREVET EUROPEEN

(11) **EP 4 079 630 B1**
(45) Date de publication et mention de la délivrance du brevet: **26.08.2026**
(21) Numéro de dépôt: 22168952.4
(22) Date de dépôt: 20.04.2022
(51) Int. Cl.: B64C 13/04, B64C 13/24

(54) **SYSTÈME DE COMMANDE D'UN ENSEMBLE HYPERSUSTENTATEUR D'UN AÉRONEF**
SYSTEM ZUR STEUERUNG EINER HOCHAUFTRIEBSEINHEIT EINES FLUGZEUGS
SYSTEM FOR CONTROLLING A HIGH-LIFT ASSEMBLY OF AN AIRCRAFT

(30) Priorité: 21.04.2021 FR 2104148
(43) Date de publication de la demande: 26.10.2022
(73) Titulaire: Dassault Aviation, 92210 Saint-Cloud (FR)
(72) Inventeur: LE BORLOCH, Jérôme, 92214 SAINT CLOUD (FR); PINEAU, François, 92214 SAINT CLOUD (FR)
(74) Mandataire: Lavoix

(56) Documents cités:
- EP-A1- 3 643 604
- EP-A1- 3 670 330
- EP-A2- 2 130 764
- CN-A- 101 962 074
- DE-A1- 102007 018 891
- FR-A1- 3 058 807
- US-A1- 2014 157 943
- US-B1- 10 216 167

## Description

La présente invention concerne un système de commande d'un ensemble hypersustentateur comprenant au moins un volet de bord de fuite d'un aéronef, l'ensemble hypersustentateur étant propre à être commandé dans au moins deux configurations aérodynamiques différentes de portances différentes, le système de commande comprenant un dispositif de commande manuel, actionnable par un pilote de l'aéronef, le dispositif de commande manuel comprenant au moins un organe mobile et un corps de base, l'organe étant mobile par rapport au corps de base.

L'ensemble hypersustentateur, par exemple becs/volets, peut être déployé selon plusieurs configurations aérodynamiques, qui forment des combinaisons d'angles de braquage becs/volets différentes.

Ces configurations sont déployées en fonction de la phase de vol de l'aéronef (décollage, croisière, approche, atterrissage, ...). Il est par exemple connu de désigner ces configurations sous les abréviations SF0, SF1, SF2, SF3 (S pour Slats c'est-à-dire becs en anglais, et F pour Flaps c'est-à-dire volets en anglais).

Un autre système de commande d'un tel ensemble hypersustentateur connu comprend une manette présentant un levier de commande, placé notamment sur le pylône entre les deux pilotes, dans le cockpit de l'aéronef.

Le levier est mobile dans plusieurs positions, chaque position correspondant à une des configurations. La commande de la configuration souhaitée se fait ainsi par le positionnement du levier en face du repère associé, qui se verrouille alors en position.

Il est aussi connu de fournir une unité de contrôle interposée entre le levier et les actionneurs des becs et volets, l'unité de contrôle incluant des lois de contrôle propres à commander les actionneurs des becs et volets en fonction de la position du levier et en fonction d'autres critères. Ces autres critères incluent par exemple la vitesse courante, les lois de contrôle pouvant par exemple être des interdictions de sortie des volets et/ou des becs en fonction de la vitesse courante.

Il est aussi désormais envisageable que les lois de contrôle de l'unité de contrôle pilotent automatiquement les actionneurs des becs et volets, indépendamment de la position du levier. Cependant, un tel pilotage automatique peut entrainer une incohérence du point de vue du pilote entre la position du levier (et donc la configuration choisie par le pilote) et la configuration réellement commandée par l'unité de contrôle.

De plus, les documents CN 101 962 074, EP 2 130 764 et US 2014/157943 divulguent des exemples de systèmes de commande d'une surface d'aile d'un aéronef, chaque système comprenant un dispositif de commande manuel, actionnable par un pilote et comprenant un organe mobile par rapport à un corps de base.

DE102007018891A1 divulgue un exemple de dispositif de commande.

Un but de l'invention est donc de fournir une solution permettant d'éviter toute confusion du pilote dans la commande de l'ensemble d'hypersustentation d'un aéronef, en particulier en présence de fonctions automatiques agissant sur la configuration.

A cet effet, l'invention concerne un système de commande selon la revendication 1.

Le système selon l'invention est de préférence selon l'une quelconque des revendications 2 à 12.

Le système de commande selon l'invention peut comprendre l'une ou plusieurs des caractéristiques suivantes, prise(s) isolément ou suivant toute combinaison techniquement possible :
- l'ensemble hypersustentateur comprend au moins un volet de bord de fuite et/ou au moins un bec de bord d'attaque de l'aéronef ;
- le déplacement de l'organe mobile de la position de repos à la première position définit un premier sens de déplacement et le déplacement de l'organe mobile de la position de repos à la deuxième position définit un deuxième sens de déplacement distinct, de préférence opposé au premier sens de déplacement ;
- chaque bec est mobile par rapport à une aile de l'aéronef entre au moins une position approchée de l'aile et une position éloignée extrême et chaque volet est mobile par rapport à une aile de l'aéronef entre au moins une position approchée de l'aile, une position intermédiaire et une position éloignée extrême ; l'ensemble hypersustentateur étant propre à être commandé dans au moins trois configurations aérodynamiques différentes, les configurations aérodynamiques incluant une configuration aérodynamique de faible portance dans laquelle chaque bec et volet est dans la position approchée, une configuration aérodynamique de portance intermédiaire dans laquelle chaque bec est dans la position éloignée et chaque volet est dans la position intermédiaire, et une configuration aérodynamique de haute portance dans laquelle chaque bec et volet est dans la position éloignée ; et
- le système de rappel comprend au moins un ressort raccordé au corps de guidage du levier et au corps de base.

De plus, l'invention concerne de préférence un aéronef comprenant le système de commande tel que décrit ci-dessus.

En outre, l'invention concerne avantageusement une méthode de commande selon la revendication 13.

L'invention sera mieux comprise à la lecture de la description qui va suivre, donnée uniquement à titre d'exemple, et faite en se référant aux dessins annexés, sur lesquels :
[Fig 1] la figure 1 est une vue schématique d'un aéronef comprenant un exemple de système de commande selon l'invention ;
[Fig 2] la figure 2 est un organigramme schématique de l'aéronef de la figure 1 ;
[Fig 3] la figure 3 est une vue schématique en coupe d'un exemple de dispositif de commande manuel du système de commande de la figure 1 ;
[Fig 4] la figure 4 est une vue schématique en perspective du dispositif de commande manuel de la figure 3.

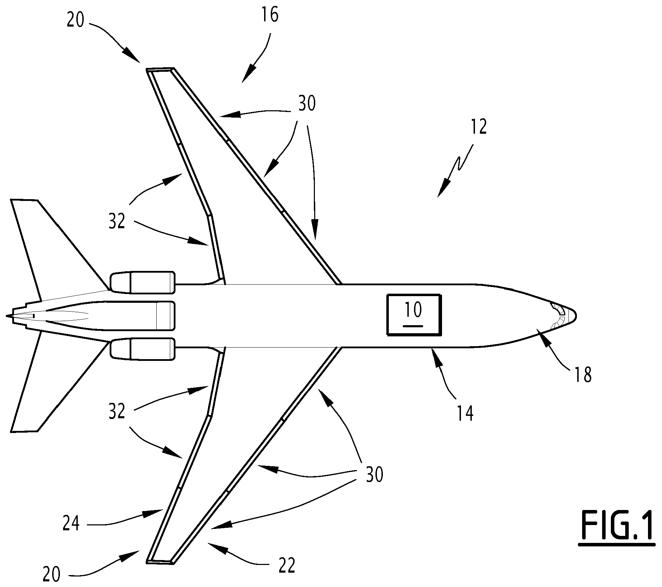

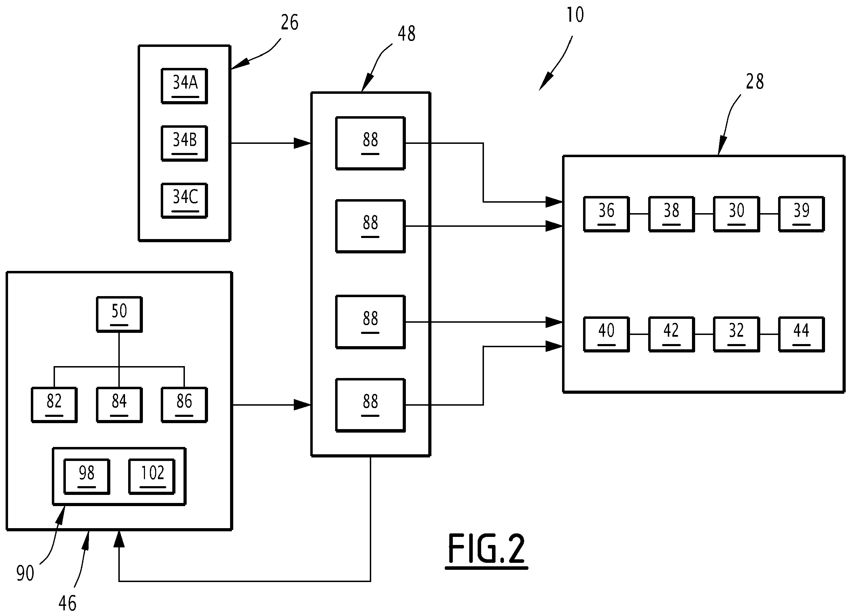

Un exemple de système de commande 10 selon l'invention, compris de préférence dans un aéronef 12, est illustré schématiquement sur les figures 1 et 2.

L'aéronef 12, illustré sur la figure 1, est par exemple un aéronef civil de transport de passagers, notamment un avion d'affaires, ou un avion militaire.

L'aéronef 12 comprend de manière générale un fuselage 14 à partir duquel s'étend une voilure 16.

La voilure 16 comprend par exemple deux ailes 20 s'étendant de part et d'autre du fuselage 14. Chaque aile 20 présente un bord d'attaque 22 et un bord de fuite 24.

L'aéronef 12 s'étend suivant un axe longitudinal.

L'aéronef 12 présente un cockpit 18 propre à recevoir au moins un pilote, le cockpit 18 étant délimité par le fuselage 14.

L'aéronef 12 comprend aussi au moins un moteur, et un système de pilotage comprenant au moins une manette des gaz actionnable par un pilote pour contrôler la poussée du moteur.

L'aéronef 12 comprend un système 26 de capteurs de paramètres de vol de l'aéronef 12.

L'aéronef 12 comprend un ensemble hypersustentateur 28 comprenant des volets 32 de bord de fuite et optionnellement des becs 30 de bord d'attaque.

Chaque capteur du système 26 est propre à mesurer au moins un paramètre de vol de l'aéronef 12 et à émettre un signal représentatif d'une valeur courante dudit paramètre de vol.

Le paramètre de vol est par exemple une position, une vitesse et/ou une altitude.

Le paramètre de vol est aussi par exemple un cap, une route, un vecteur vitesse, une vitesse sol, et/ou une accélération.

Le paramètre de vol est en outre par exemple une vitesse air, une vitesse de Mach, et/ou des températures totales et statiques de l'aéronef 12.

Le système de capteurs 26 comprend par exemple au moins un capteur inertiel 34A.

Chaque capteur inertiel 34A est par exemple une centrale inertielle éventuellement hybridée avec un système de positionnement par satellite, en particulier des GPS.

Le système de capteurs 26 comporte aussi par exemple au moins un capteur de données air 34B.

Chaque capteur de données air 34B comprend par exemple des sondes Pitot.

Le système de capteurs 26 comporte en outre par exemple au moins un capteur 34C d'attitude et de cap de référence.

Chaque capteur 34C d'attitude et de cap de référence est par exemple constitué d'au moins un gyromètre, d'au moins un accéléromètre, ou/et d'au moins un magnétomètre qui détectent les accélérations et les champs magnétiques subis par l'aéronef 12. Chaque capteur 34C d'attitude et de cap de référence est par exemple formé de systèmes micro-électromécaniques (ou MEMS en anglais).

L'ensemble hypersustentateur 28 est destiné à modifier le coefficient de portance de l'aéronef 12. Par exemple, l'ensemble hypersustentateur 28 est destiné à augmenter le coefficient de portance, notamment aux basses vitesses, pour abaisser la vitesse de décrochage.

L'ensemble hypersustentateur 28 comprend de préférence au moins un, avantageusement au moins deux, et par exemple trois, becs 30 par aile 20 de l'aéronef 12.

Chaque bec 30 (en anglais : slats) a pour fonction de retarder le décrochement des filets d'air sur l'extrados de l'aile 20.

Chaque bec 30 est disposé sur le bord d'attaque 22 d'une des ailes 20.

Chaque bec 30 est mobile par rapport à une aile 20 de l'aéronef 12 entre une position approchée de l'aile 20 et une position éloignée extrême.

Lesdites position approchée de l'aile 20 et position éloignée forment de préférence des positions extrêmes de déplacement du bec 30.

Chaque bec 30 peut aussi par exemple être immobilisé dans un ou des positions intermédiaires entre la position approchée et la position éloignée extrême.

La position approchée correspond de préférence à une position rétractée dans laquelle le bec 30 ne fait pas saillie par rapport à l'aile 20.

L'ensemble hypersustentateur 28 comprend un groupe de commande 36 des becs et, pour chaque bec 30, au moins un actionneur 38 propre à déplacer le bec 30 entre la position approchée et la position éloignée extrême.

Chaque actionneur 38 est par exemple un actionneur à vis.

Le groupe de commande 36 est alors un groupe moteur. Chaque actionneur 38 est connecté audit groupe de commande 36 des becs par une chaîne mécanique de transmission.

En variante, chaque actionneur 38 est un vérin hydraulique.

Le groupe de commande 36 est alors un bloc de commande hydraulique commun, propre à distribuer une puissance hydraulique à chaque actionneur 38 par l'intermédiaire d'un réseau de conduites hydrauliques.

Le groupe de commande 36 des becs est propre à commander conjointement l'ensemble des becs 30 en déplacement.

Le groupe de commande 36 des becs est propre à recevoir un vecteur de commande de portance de la centrale de commande de portance 48, comme décrit plus en détails par la suite, et à actionner en conséquence chaque actionneur 38 des becs 30.

Le groupe de commande 36 des becs est propre à maintenir chaque actionneur 38, et donc chaque bec 30, à une position commandée, par exemple par l'intermédiaire d'un frein.

L'ensemble hypersustentateur 28 comprend aussi de préférence, pour chaque bec 30, un capteur de position 39 propre à émettre un signal représentatif de la position du bec 30 au moins lorsque le bec 30 est en position approchée et en position éloignée.

Ledit capteur de position 39 comprend par exemple ainsi deux micro-commutateurs de position associés respectivement aux positions approchée et éloignée.

L'ensemble hypersustentateur 28 comprend de préférence au moins un volet 32 par aile 20, avantageusement au moins deux volets 32 par aile 20 de l'aéronef 12.

Chaque volet 32 (en anglais : flap) est disposé sur le bord de fuite 24 d'une des ailes 20.

Chaque volet 32 est mobile par rapport à une aile 20 de l'aéronef 12 entre au moins une position approchée de l'aile 20, de préférence une première position intermédiaire, avantageusement une deuxième position intermédiaire, et une position éloignée extrême, lesdites positions étant distinctes.

Lesdites position approchée et position éloignée forment de préférence des positions extrêmes de déplacement du volet 32.

Le nombre de position(s) intermédiaire(s) entre les deux positions extrêmes n'est pas limitant. Le nombre de position(s) intermédiaire(s) différente(s) peut donc être de zéro, un, deux, trois, quatre, cinq, six, sept, huit, et même plus de huit.

La position approchée correspond de préférence à une position rétractée dans laquelle le volet 32 ne fait pas saillie par rapport à l'aile 20.

Avantageusement, pour chaque volet 32, lesdites positions du volet 32, autre que la position approchée, définissent des angles de braquage distincts.

De la position approchée à la position éloignée, le volet 32 présente une inclinaison croissante vers le bas.

L'angle de braquage est par exemple défini à partir de l'axe longitudinal de l'aéronef 12 ou à partir de la corde de l'aile 20.

Dans un exemple de réalisation, la première position intermédiaire définit un angle de braquage compris entre 7° et 11°, par exemple égal à 10°, la deuxième position intermédiaire avantageuse définit un angle de braquage compris entre 15° et 25°, par exemple égal à 20°, et la position éloignée définit un angle de braquage compris entre 35° et 45°, par exemple égale à 40°.

L'ensemble hypersustentateur 28 comprend par exemple, pour chaque volet 32, un groupe de commande 40 et au moins un actionneur 42 propre à déplacer le volet 32 entre lesdites positions.

Chaque actionneur 42 est connecté audit groupe de commande 40 associé.

Chaque actionneur 42 est par exemple un vérin électromécanique.

Chaque groupe de commande 40 est alors un groupe moteur électromagnétique.

Chaque groupe de commande 40 est propre à commander le volet 32 associé en déplacement.

Chaque groupe de commande 40 est propre à recevoir un vecteur de commande de portance de la centrale de commande de portance 48, comme décrit plus en détails par la suite, et à actionner en conséquence l'actionneur 42 associé du volet 32.

Chaque groupe de commande 40 est propre à maintenir l'actionneur 42 associé, et donc le volet 32, à une position commandée, par exemple par l'intermédiaire d'un frein.

L'ensemble hypersustentateur 28 comprend aussi de préférence, pour chaque volet, un capteur de position 44 propre à émettre un signal représentatif de la position du volet 32 au moins lorsque le volet 32 est dans une desdites positions.

L'ensemble hypersustentateur 28 est propre à être commandé dans au moins deux configurations aérodynamiques différentes, de préférence au moins trois configurations aérodynamiques différentes, et avantageusement dans au moins quatre configurations aérodynamiques différentes.

Le nombre de configurations aérodynamiques différentes n'est pas limitant. Le nombre de configurations aérodynamiques différentes peut donc être de un, deux, trois, quatre, cinq, six, sept, huit, neuf, dix et même plus de dix.

Les configurations aérodynamiques différentes présentent respectivement des portances différentes croissantes.

Les configurations aérodynamiques incluent par exemple :
- une configuration aérodynamique de faible portance SF0, dans laquelle chaque bec 30 et volet 32 est dans la position approchée,
- de préférence, une première configuration aérodynamique de portance intermédiaire SF1, dans laquelle chaque bec 30 est dans la position éloignée extrême et chaque volet 32 est dans la première position intermédiaire,
- avantageusement, une deuxième configuration aérodynamique de portance intermédiaire SF2, dans laquelle chaque bec 30 est dans la position éloignée extrême et chaque volet 32 est dans la deuxième position intermédiaire, et
- une configuration aérodynamique de haute portance SF3, dans laquelle chaque bec 30 et volet 32 est dans la position éloignée extrême.

Par exemple, le nombre de configurations aérodynamiques différentes est ici égal à quatre.

Dans des variantes, la première configuration aérodynamique de portance intermédiaire SF1 et/ou la deuxième configuration aérodynamique de portance intermédiaire SF2 est(sont) omise(s).

Plus de quatre configurations aérodynamiques peuvent aussi être prévues pour l'ensemble hypersustentateur, les configurations aérodynamiques incluant alors par exemple au moins les configurations SF0 à SF3 ci-dessus.

Chacune desdites configurations aérodynamiques forment des configurations stables au cours du temps. En d'autres termes, tant que l'ensemble hypersustentateur 28 n'est pas commandé dans une autre configuration aérodynamique, l'ensemble hypersustentateur 28 reste dans la configuration aérodynamique courante.

Plus précisément, par exemple, lorsque l'ensemble hypersustentateur 28 est dans chacune desdites configurations aérodynamiques, le frein du groupe de commande 36 des becs maintient en position chaque bec 30, et le frein de chaque groupe de commande 40 maintient en position chaque volet 32. Alternativement, le maintien en position n'est pas nécessairement mis en œuvre par les freins.

Lors du passage de l'ensemble hypersustentateur 28 d'une configuration aérodynamique à une autre, l'ensemble des volets 32 sont commandés conjointement d'une part et, de même, l'ensemble des becs 30 sont commandés conjointement d'autre part.

De préférence, chaque configuration aérodynamique est respectivement destinée à être mise en œuvre pendant une phase de vol de l'aéronef 12, les phases de vol incluant par exemple une phase de décollage, une phase de croisière, une phase d'approche, et une phase d'atterrissage.

Le système de commande 10 est destiné à commander la portance de l'aéronef 12 en commandant la configuration aérodynamique de l'ensemble hypersustentateur 28.

Le système de commande 10 comprend un dispositif de commande manuel 46, actionnable par un pilote de l'aéronef 12.

De préférence, le système de commande 10 comporte en outre le système 26 de capteurs de paramètres de vol de l'aéronef 12 tel que décrit ci-dessus.

Le système de commande 10 comporte aussi une centrale de commande de portance 48.

Le dispositif de commande manuel 46 est localisé dans le cockpit 18 de l'aéronef 12.

Le dispositif de commande manuel 46 comprend au moins un organe mobile 50 et un corps de base 52.

L'organe 50 est mobile par rapport au corps de base 52. L'organe mobile 50 est propre à être déplacé par rapport au corps de base 52 au moins entre une position de repos, une première position et une deuxième position distinctes

Les première et deuxième positions définissent des positions butoirs du déplacement de l'organe mobile 50 par rapport au corps de base 52. L'organe mobile 50 est ainsi en butée contre le corps de base 52 dans chacune des première et deuxième positions.

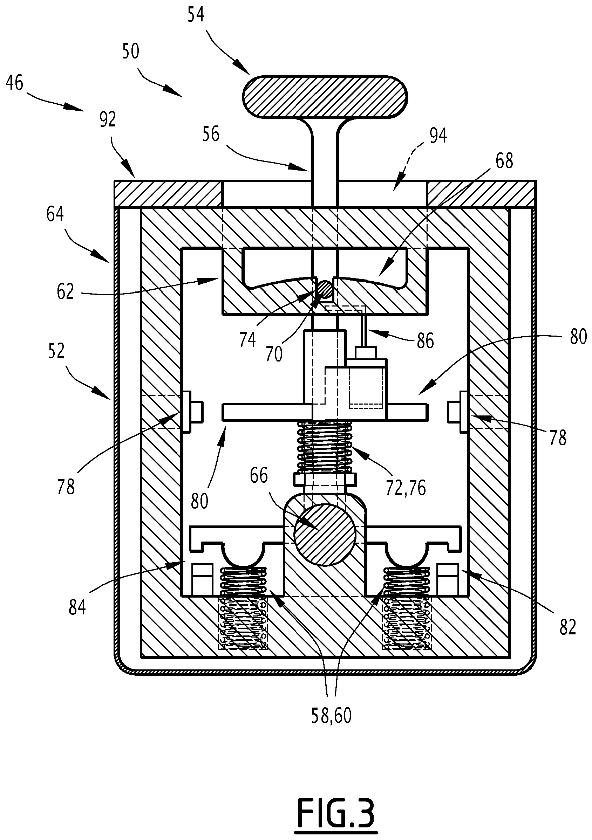

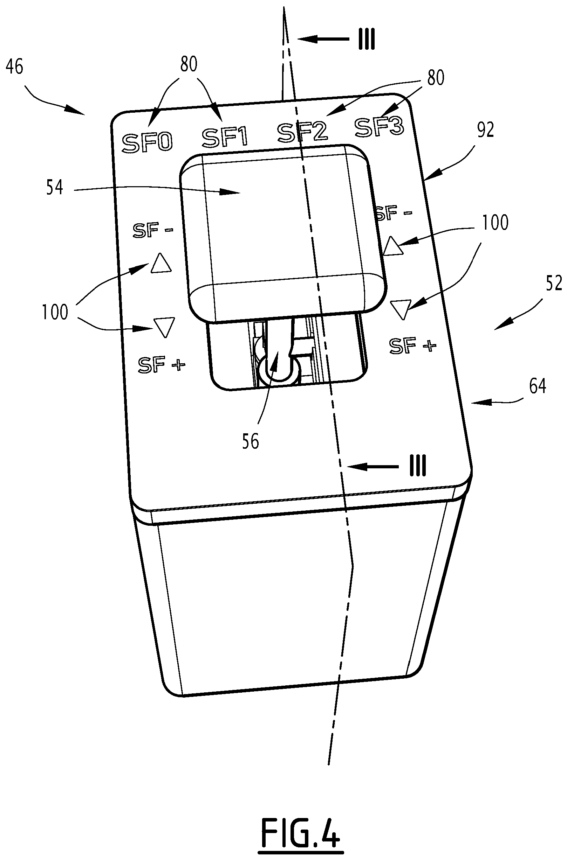

Dans l'exemple illustré sur les figures 3 et 4, le dispositif de commande manuel 46 est une manette et l'organe mobile 50 est un levier.

Le levier 50 comprend une poignée 54 et un corps de guidage 56 sur lequel est montée la poignée 54.

La poignée 54 est propre à être saisie par un pilote de l'aéronef 12.

Dans l'exemple préféré de la figure 3, le levier 50 est mobile angulairement par rapport au corps de base 52. Alternativement, le levier 50 est mobile en translation, par exemple rectiligne, par rapport au corps de base 52.

Le levier 50 est propre à être saisi par le pilote de l'aéronef 12 pour être déplacé par rapport au corps de base 52. Par un tel déplacement du levier 50, qui correspond à l'actionnement de la manette 46, le pilote vise à commander un changement de portance de l'aéronef 12 et donc un changement de configuration aérodynamique.

Comme indiqué ci-dessus, le levier 50 est propre à être déplacé par rapport au corps de base 52 au moins entre la position de repos, la première position et la deuxième position distinctes.

Un exemple de position de repos est illustré sur la figure 3.

Dans l'exemple de la figure 3, la position de repos est médiane par rapport aux première et deuxième positions. Cependant, la position de repos peut être toute position située entre les première et deuxième positions, et non nécessairement une position médiane par rapport aux première et deuxième positions.

Le déplacement de la position de repos à la première position définit un premier sens de déplacement, et le déplacement de la position de repos à la deuxième position définit un deuxième sens de déplacement distinct.

Par exemple, le deuxième sens de déplacement est opposé au premier sens de déplacement.

Le déplacement entre la première position et la deuxième position est ainsi effectué dans un même plan de déplacement.

Dans cet exemple, la position de repos, la première position et la deuxième position sont alignées.

Dans l'exemple de la figure 3, la première position correspond à une position arrière et la deuxième position correspond à une position avant.

Les termes « avant » et « arrière » sont pris par rapport à l'axe longitudinal de l'aéronef 12. A titre indicatif, le cockpit 18 est à l'avant de l'aéronef 12 par rapport aux ailes 20.

De manière générale, le dispositif de commande manuel 46 comprend un dispositif de rappel élastique 58 de l'organe mobile 50 dans la position de repos.

Le dispositif de rappel élastique 58 est propre à exercer une force de rappel sur l'organe mobile 50, lorsque l'organe mobile 50 est écarté de la position de repos.

Un pilote de l'aéronef 12 est ainsi propre à déplacer l'organe mobile 50 de la position de repos à chacune des première et deuxième positions en exerçant une force sur l'organe mobile 50 vers lesdites positions, la force étant exercée à l'encontre de la force de rappel du dispositif de rappel 58.

La position de repos forme l'unique position stable de l'organe mobile 50 par rapport au corps de base 52.

Dans l'exemple des figures 3 et 4 où le dispositif de commande manuel 46 est une manette, le dispositif de rappel élastique 58 comprend au moins un ressort 60 raccordé au corps de guidage 56 du levier 50 et au corps de base 52.

Dans l'exemple de la figure 3, le dispositif de rappel élastique 58 comprend deux ressorts 60 identiques, agencés de telle sorte qu'un premier des ressorts 60 soit compressé lorsque le levier 50 est dans la première position et que le deuxième des ressorts 60 soit compressé lorsque le levier 50 est dans la deuxième position.

Dans une variante, le dispositif de rappel 58 ne comprend qu'un unique ressort 60. L'unique ressort 60 est alors par exemple agencé pour être compressé lorsque le levier 50 est dans la première position et/ou dans la deuxième position, l'unique ressort 60 présentant une longueur de repos correspondant à sa longueur lorsque le levier 50 est dans la position de repos.

Le corps de base 52 comprend une structure de support 62.

Le corps de base 52 comprend aussi par exemple un coffre 64 dans lequel est disposée la structure de support 62.

La structure de support 62 supporte le levier 50.

Dans l'exemple illustré de la figure 3, la structure de support 62 présente une articulation avec le levier 50, en particulier avec le corps de guidage 56 du levier 50, l'articulation formant un point de pivot 66 du levier 50 par rapport au corps de base 52.

Le déplacement angulaire du levier 50 est réalisé par rapport à ce point de pivot 66.

Le corps de base 52 délimite par exemple au moins une rainure de guidage 68.

La rainure de guidage 68 est délimitée dans la structure de support 62 du corps de base 52.

La rainure de guidage 68 est destinée à guider le déplacement du levier 50 par rapport au corps de base 52.

Dans l'exemple illustré, la rainure de guidage 68 présente une forme d'arc de cercle, dans la mesure où le levier 50 est mobile angulairement par rapport au corps de base 52. La forme d'arc de cercle présente un centre correspondant audit point de pivot 66.

Alternativement, la rainure présente une forme allongée de manière rectiligne, dans le cas où le levier 50 est mobile en translation rectiligne par rapport au corps de base 52.

Le corps de guidage 56 du levier 50 s'étend à l'intérieur et à l'extérieur du coffre 64.

Le corps de guidage 56 comprend un doigt de guidage 70 reçu dans la rainure de guidage 68.

Dans un mode de réalisation avantageux, la manette 46 comprend un dispositif de verrouillage 72 du levier 50 en position de repos.

Le dispositif de verrouillage 72 comprend une encoche 74 définie dans la rainure de guidage 68. L'encoche 74 est propre à recevoir le doigt de guidage 70 lorsque le levier 50 est dans la position de repos.

Le dispositif de verrouillage 72 comprend aussi un système de rappel élastique 76 du doigt de guidage 70 dans l'encoche 74.

Le système de rappel élastique 76 exerce une force de rappel sur le levier 50, ladite force de rappel passant par l'encoche 74, de sorte à contraindre le doigt de guidage 70 dans l'encoche 74.

Le système de rappel élastique 76 comprend par exemple au moins un ressort raccordé au corps de guidage 56 du levier 50 et au corps de base 52.

Le ressort du système de rappel élastique 76 est aligné avec l'encoche 74.

Le dispositif de verrouillage 72 est ainsi propre à verrouiller le levier 50 dans la position de repos. Un pilote de l'aéronef 12 est ainsi en mesure de déverrouiller le levier 50 de la position de repos en exerçant une force sur le levier 50 de sens opposé à la force de rappel du système de rappel 76.

La force nécessaire exercée par le pilote pour déverrouiller le levier 50 permet au doigt de guidage 70 de sortir de l'encoche 74.

De préférence, la force nécessaire exercée par le pilote pour déverrouiller le levier 50 est orientée vers le haut.

Dans l'exemple des figures 3 et 4, la manette 46 comprend, pour chacune des première et deuxième positions, au moins un aimant 78 solidaire de l'un du levier 50 et du corps de base 52, l'aimant 78 étant propre à exercer une force d'attraction sur une région de contact 80 de l'autre du levier 50 et du corps de base 52.

En particulier, ladite région de contact 80 est une région de l'autre du levier 50 et du corps de base 52 propre à entrer en contact avec l'aimant 78, lorsque le levier 50 est dans la première ou la deuxième position.

En d'autres termes, pour chacune des première et deuxième positions, ladite région de contact 80 et l'aimant 78 forme un couple de butée pour le levier.

La région de contact 80 est par exemple au moins en partie réalisée en métal.

Dans l'exemple illustré sur la figure 3, chaque aimant 78 est solidaire du corps de base 52. La région de contact 80 est une région du levier 50, en particulier une région du corps de guidage 56 du levier 50.

La force d'attraction exercée par chaque aimant 78 est inférieure à une force de rappel exercée par le dispositif de rappel élastique 58 du levier 50.

Ainsi, même lorsque le levier 50 est dans la première ou la deuxième position, le levier 50 est contraint vers la position de repos, en l'absence de sollicitation du pilote sur le levier 50.

Lorsque le pilote déplace le levier 50 de la position de repos à une des premières et deuxième positions, le ressenti d'effort est procuré au moins par les forces d'attraction des aimants 78 et le dispositif de rappel 58.

La différence de comportement, notamment linéaire pour le dispositif de rappel 58 et pseudo quadratique pour chaque aimant 78, permet d'apporter une sensation de crantage de fin de course.

Le dispositif de commande manuel 46 est configuré pour émettre au moins un signal représentatif de la position, par exemple angulaire, atteinte par l'organe mobile 50 par rapport au corps de base 52, lorsque l'organe mobile 50 atteint une des première et deuxième positions, pour faire passer l'ensemble hypersustentateur 28 entre deux des configurations aérodynamiques.

Ce signal est représentatif du changement de portance, et donc du changement de configuration aérodynamique, que souhaite commander le pilote.

En particulier, le passage de l'ensemble hypersustentateur 28 entre deux des configurations aérodynamiques est commandé en fonction de la position atteinte par l'organe mobile 50 entre les première et deuxième positions.

Plus précisément, le dispositif de commande manuel 46 est configuré, lorsque l'organe mobile 50 atteint la première position depuis la position de repos, pour émettre au moins un signal représentatif de l'atteinte de la première position pour faire passer l'ensemble hypersustentateur 28 d'une configuration aérodynamique courante à une autre des configurations aérodynamiques ayant une portance supérieure à la configuration aérodynamique courante.

De plus, le dispositif de commande manuel 46 est configuré, lorsque l'organe mobile 50 atteint la deuxième position depuis la position de repos, pour émettre au moins un signal représentatif de l'atteinte de la deuxième position pour faire passer l'ensemble hypersustentateur 28 d'une configuration aérodynamique courante à une autre des configurations aérodynamiques ayant une portance inférieure à la configuration aérodynamique courante.

En d'autres termes, le premier sens de déplacement de l'organe mobile 50 (dans cet exemple, vers l'arrière) est associé avec une augmentation de la portance, et le deuxième sens de déplacement (dans cet exemple, vers l'avant) est associé avec une baisse de la portance.

Avantageusement, le dispositif de commande manuel 46 comprend un système de détection 82 de l'organe mobile 50 en première position et un système de détection 84 de l'organe mobile 50 en deuxième position.

Le dispositif de commande manuel 46 comprend aussi de préférence un système de détection 86 de l'organe mobile 50 en position de repos.

Le dispositif de commande manuel 46 émet chaque signal représentatif de la position atteinte par l'organe mobile 50 par rapport au corps de base 52 par l'intermédiaire desdits système de détection 82, 84, 86.

Chaque système de détection 82, 84, 86 comprend au moins un capteur de position, avantageusement une redondance d'au moins deux capteurs de position, de préférence une redondance d'au moins trois capteurs de position, par exemple une redondance de quatre capteurs de position.

Pour chaque système de détection 82, 84, 86, chaque capteur de position du système de détection 82, 84, 86 est propre à envoyer en parallèle un signal représentatif de la position atteinte par l'organe mobile 50 par rapport au corps de base 52, lorsque l'organe mobile 50 atteint la position associée avec le système de détection 82, 84, 86.

Chaque capteur de position comprend par exemple un micro-commutateur.

Dans un exemple de réalisation préféré, la centrale de commande de portance 48 est propre à commander l'ensemble hypersustentateur 28.

La centrale de commande de portance 48 est raccordée à l'ensemble hypersustentateur 28 et au dispositif de commande manuel 46 (dans l'exemple ci-dessus à la manette 46).

Comme illustrée sur la figure 1, la centrale de commande de portance 48 est interposée entre le dispositif de commande manuel 46 et l'ensemble hypersustentateur 28. Ainsi, il n'y a pas de liaison directe entre le dispositif de commande manuel 46 et l'ensemble hypersustentateur 28.

La centrale de commande de portance 48 est un système de commandes de vol numérique (« Digital Flight Command System » ou « DFCS » en anglais).

La centrale de commande de portance 48 est configurée pour recevoir, au cours du temps, chaque signal représentatif émis par le dispositif de commande manuel 46 et les signaux émis par les capteurs du système de capteurs 26.

Dans un exemple de réalisation préféré, la centrale de commande 48 est propre à recevoir et stocker dans au moins une mémoire une succession des signaux représentatifs de la position atteinte par l'organe mobile 50 au cours du temps.

En particulier, les capteurs du système de capteurs 26 sont raccordés à la centrale de commande de portance 48, pour délivrer à chaque instant, les valeurs courantes des paramètres de vol qu'ils mesurent à la centrale de commande de portance 48, par exemple à une fréquence supérieure ou égale à 50 Hz.

De manière générale, La centrale de commande de portance 48 est configurée pour élaborer au moins un vecteur de commande de portance de l'ensemble hypersustentateur 28, à partir d'au moins une loi de commande de portance, ayant pour données d'entrée au moins chaque signal reçu du dispositif de commande manuel 46 et/ou des capteurs du système de capteurs 26.

La centrale de commande de portance 48 est alors configurée pour envoyer un signal comprenant le vecteur de commande de portance élaboré à l'ensemble hypersustentateur 28.

Dans un mode de réalisation préféré, comme illustré dans l'exemple de la figure 1, la centrale de commande de portance 48 comprend au moins quatre calculateurs 88 redondants de commande de portance. En variante, la centrale de commande 48 n'en comprend qu'un unique, ou moins de quatre, ou plus de quatre.

Chaque calculateur de commande de portance 88 comporte par exemple un processeur et une mémoire contenant des modules ou applications logicielles propres à être exécutées par le processeur pour réaliser les fonctions du calculateur 88 décrites ci-dessous. En variante, chaque calculateur de commande de portance 88 est mis en œuvre sous forme de composants logiques programmables ou de circuits intégrés dédiés, destinés à réaliser les fonctions du calculateur 88 décrites ci-dessous.

Chaque calculateur de commande de portance 88 est connecté au dispositif de commande manuel 46 et au système de capteurs 26.

En particulier, chaque calculateur de commande de portance 88 est configuré pour recevoir au moins chaque signal représentatif émis par le dispositif de commande manuel 46 et les signaux émis par les capteurs du système de capteurs 26.

Chaque calculateur de commande de portance 88 est configuré pour élaborer en parallèle un vecteur de commande de portance à partir d'au moins ladite loi de commande de portance, qui a pour données d'entrée au moins chaque signal reçu du dispositif de commande manuel 46 et/ou des capteurs du système de capteurs 26.

Ici et par la suite, on entend par « vecteurs de commande élaborés en parallèle », des vecteurs de commande ayant été respectivement élaborés par les calculateurs de commande de portance 88 à partir des mêmes valeurs des données d'entrée dans la loi de commande.

Ils sont en particulier élaborés pour la même position de l'organe mobile 50, par rapport au corps de base 52, du dispositif de commande manuel 46 actionné par le pilote et/ou pour les mêmes valeurs courantes des paramètres de vol mesurées par les capteurs du système 26.

Les vecteurs de commande élaborés en parallèle par les calculateurs de commande de portance 88 sont identiques, sauf erreur d'élaboration de la part d'au moins un des calculateurs 88, et en négligeant les éventuels asynchronismes.

Chaque vecteur de commande élaboré comprend une consigne d'actionnement des actionneurs 42 des volets 32, destinée à être appliquée par chaque groupe de commande 40 des volets 32, et optionnellement une consigne d'actionnement des actionneurs 38 des becs 30, destinée à être appliquée par le groupe de commande 36 des becs.

Chaque consigne d'actionnement contient les informations permettant aux groupes de commande 36, 40 concernés de savoir dans quelle mesure commander les actionneurs 38, 42 pour que l'ensemble hypersustentateur 28 atteigne la configuration aérodynamique commandée.

Dans l'exemple préféré où au moins un des systèmes de détection 82, 84, 86 de l'organe mobile 50 en première position, en deuxième position et en position de repos comprend une redondance d'au moins deux capteurs de position, chaque calculateur de commande de portance 88 est alors configuré pour sélectionner un des signaux en parallèles reçus par ces capteurs de position redondés, par exemple par vote centralisé sur lesdits signaux en parallèles reçus.

Le vote centralisé est par exemple effectué par des algorithmes de détermination par majorité ou par moyenne pondérée ou par médiane.

Le signal sélectionné forme alors une des entrées de la loi de commande.

De plus, avantageusement, lorsque la centrale de commande 48, et donc chaque calculateur de commande 88, reçoit deux signaux consécutifs du dispositif de commande manuel 46 représentatifs de la même position atteinte par l'organe mobile 50, la centrale de commande 48 est configurée pour ne pas prendre en compte le deuxième des deux signaux consécutifs, si aucun signal représentatif de l'atteinte de la position de repos n'est interposé entre les deux signaux consécutifs.

Une sécurité est ainsi fournie dans la commande manuelle de la portance contre d'éventuels double-mouvements intempestifs du pilote sur le dispositif de commande manuel 46.

La centrale de commande de portance 48 est propre à élaborer des vecteurs de commande de portance, à partir d'une pluralité de lois de commande de portance distinctes.

Chaque loi de commande est par exemple stockée dans la mémoire de chaque calculateur de commande de portance 88.

Au moins une des lois de portance est une loi de commande manuelle.

Les données d'entrée de la loi de commande manuelle comprennent au moins des données représentatives de la position de l'organe mobile 50 du dispositif de commande manuel 46 actionné par le pilote.

De préférence, la loi de commande manuelle est propre à moduler les commandes entrées par le pilote lorsqu'il actionne le dispositif de commande manuel 46.

Les données d'entrée de la loi de commande manuelle comprennent alors en outre au moins des données représentatives des valeurs courantes des paramètres de vol mesurées par les capteurs du système 26.

De manière générale, pour chaque configuration aérodynamique possible dans laquelle l'ensemble hypersustentateur 28 est propre à passer à partir de la configuration aérodynamique courante, la centrale de commande 48, et donc chaque calculateur 88, est ainsi configurée pour déterminer une autorisation ou une interdiction de passage à la configuration aérodynamique possible en fonction de signaux reçus des capteurs du système de capteurs 26.

Cette autorisation ou interdiction est par exemple déterminée par la loi de commande manuelle.

Ainsi, par exemple, la loi de commande manuelle est propre à appliquer une protection en survitesse et/ou en évitement d'un décrochage de l'aéronef 12.

La protection en survitesse est par exemple une interdiction de passage à une configuration aérodynamique possible où les volets 32 sont dans une position autre que dans la position approchée, lorsque la vitesse courante de l'aéronef 12 est au-dessus d'une vitesse limite prédéterminée. La vitesse limite prédéterminée est par exemple 250 kt (environ 463 km/h).

De préférence, la centrale de commande de portance 48 présente aussi des fonctions automatiques de commande de l'ensemble hypersustentateur 28.

Au moins une des lois de portance est une loi de commande automatique.

La loi de commande automatique est avantageusement mise en œuvre de manière prioritaire par la centrale de commande de portance 48, par rapport à la loi de commande manuelle.

La loi de commande automatique est propre à élaborer automatiquement des vecteurs de commande de portance uniquement à partir des signaux reçus des capteurs du système de capteurs 26.

Par « automatique » et « automatiquement », on entend qu'aucun actionnement du dispositif de commande manuel 46 par le pilote n'est pris en compte dans l'élaboration des vecteurs de commande de portance.

Par exemple, la loi de commande automatique est propre à élaborer automatiquement des vecteurs de commande de portance en fonction d'une phase de vol de l'aéronef 12.

La loi de commande automatique est propre à déterminer la phase de vol courante.

Chaque phase de vol est par exemple caractérisée par des valeurs particulières de données de capteurs du système de capteurs 26. Ainsi, à chaque phase de vol courante dans laquelle se trouve l'aéronef 12 est associé un jeu de valeurs de données de capteurs.

Les vecteurs de commande de portance élaborés en fonction d'une phase de vol incluent par exemple la commande d'un passage de l'ensemble sustentateur de la configuration aérodynamique courante à la configuration aérodynamique de faible portance SF0 dans une phase de vol de décollage.

Les vecteurs de commande de portance élaborés en fonction d'une phase de vol incluent par exemple aussi la commande d'un passage de l'ensemble sustentateur de la configuration aérodynamique courante à la configuration aérodynamique de haute portance SF3 dans une phase de vol d'approche.

Par exemple, en cas de remise des gaz du moteur de l'aéronef 12, la loi de commande automatique est aussi propre à élaborer automatiquement des vecteurs de commande de portance commandant le passage de l'ensemble sustentateur de la configuration aérodynamique courante à la configuration aérodynamique de faible portance SF0.

D'autres exemples de commande automatique sont bien entendu envisageables par l'homme du métier, et ne seront pas décrits par la suite.

Après élaboration de chaque vecteur de commande, chaque calculateur de commande de portance 88 est configuré pour envoyer en parallèle un signal aux groupes de commande 36, 40 des volets et des becs, le signal comprenant le vecteur de commande de portance élaboré.

Chaque groupe de commande 36, 40 est alors par exemple configuré pour sélectionner un des signaux en parallèles reçus par les calculateurs de commande de portance 88 redondés, par exemple par vote centralisé sur lesdits signaux en parallèles reçus.

Le vote centralisé est par exemple effectué par des algorithmes de détermination par majorité ou par moyenne pondérée ou par médiane.

De plus, dans un mode de réalisation préféré, le système de commande 10 permet une visualisation de l'état de commande pour un pilote de l'aéronef 12.

Le dispositif de commande manuel 46 comprend un dispositif d'indication visuelle 90 propre à présenter, à destination d'un pilote de l'aéronef 12, une indication visuelle représentative de la configuration aérodynamique commandée par le vecteur de commande élaboré.

Le dispositif d'indication visuelle 90 répond au besoin instinctif d'un pilote de l'aéronef 12 de regarder l'organe de commande manipulé, pour connaitre la configuration commandée.

Pour ce faire, la centrale de commande 48 est configurée pour envoyer un signal représentatif du vecteur de commande élaboré au dispositif de commande manuel 46.

Le dispositif d'indication visuelle 90 est propre à recevoir et traiter chaque signal représentatif du vecteur de commande élaboré.

Le dispositif d'indication visuelle 90 comprend par exemple des moyens de traitement de chaque signal représentatif du vecteur de commande élaboré, par exemple un processeur et une mémoire associée.

Le dispositif d'indication visuelle 90 et configuré pour déterminer, à partir de chaque vecteur de commande élaboré, la configuration aérodynamique commandée.

La mémoire est propre à stocker un historique des configurations aérodynamiques atteintes par l'ensemble hypersustentateur 28.

Dans l'exemple de la figure 4, le dispositif d'indication visuelle 90 comprend une platine solidaire du corps de base 52.

La platine 92 est visible par un pilote aux commandes de l'aéronef 12.

La platine 92 est par exemple portée sur une surface supérieure du corps de base 52.

La platine 92 est par exemple plate.

L'organe mobile 50 fait saillie par rapport à la platine 92.

Dans l'exemple illustré sur les figures 3 et 4 où l'organe mobile 50 est un levier, la platine 92 délimite un orifice 94 traversé par le levier 50, en particulier traversé par le corps de guidage 56 du levier 50. L'orifice 94 de la platine 92, traversé par le levier 50, est propre à autoriser le déplacement du levier 50 entre les première et deuxième positions.

La platine 92 présente des repères 96.

Chaque repère 96 est respectivement associé à une des configurations aérodynamiques.

Les repères 96 sont ici alignés et, par exemple, disposés en avant de l'organe mobile 50.

Chaque repère 96 est par exemple formé au moins par une ouverture dans la platine 92, l'ouverture dessinant un motif représentatif de la configuration aérodynamique à laquelle est associé le repère 96 et par un éclairage 98 commandable disposé en-dessous du motif.

Dans l'exemple illustré sur la figure 4, le motif dessiné par l'ouverture de chaque repère 96 est choisi parmi les abréviations SF0, SF1, SF2 et SF3.

Chaque repère 96 est propre à être commandé pour passer entre au moins une configuration allumée lumineuse et une configuration éteinte.

La configuration de chaque repère 96 est par exemple commandée par le processeur du dispositif d'indication visuelle 90.

Dans la configuration éteinte, aucune lumière n'est émise par le repère. En particulier, aucune lumière n'est émise par l'éclairage 98.

Dans la configuration allumée lumineuse, le repère 96 émet une intensité lumineuse. En particulier, l'intensité lumineuse est alors par exemple constante au cours du temps. L'intensité lumineuse est produite par l'éclairage 98 commandé.

L'intensité émise par l'éclairage 98 est par exemple de couleur magenta.

Dans cet exemple, le dispositif d'indication visuelle 90 est propre à présenter ladite indication visuelle représentative de la configuration aérodynamique commandée en commandant le passage à la configuration lumineuse du repère 96 associé à la configuration aérodynamique commandée.

De plus, le dispositif d'indication visuelle 90 est propre à présenter ladite indication visuelle représentative de la configuration aérodynamique commandée en commandant conjointement le passage à la configuration éteinte de chaque autre repère 96 associé aux configurations aérodynamiques non commandées.

Ainsi, chaque repère 96 peut donc changer de configuration suite à une intervention manuelle du pilote sur le dispositif de commande manuel 46, ou suite à l'intervention d'une fonction automatique agissant sur les becs 30 et les volets 32.

Dans un mode de réalisation préféré, le dispositif d'indication visuelle 90 informe un pilote d'un état transitoire de l'ensemble hypersustentateur 28, c'est-à-dire lorsque les volets 32 (ou les volets 32 et les becs 30) sont en cours de déplacement vers les positions respectives commandées correspondant à la configuration aérodynamique commandée.

Pour ce faire, chaque repère 96 est en outre par exemple propre à être commandé pour passer dans une configuration allumée de transition.

Dans un premier exemple de réalisation, le dispositif d'indication visuelle 90 informe le pilote d'un état transitoire de l'ensemble hypersustentateur 28 par clignotement de chaque repère 96

La configuration allumée de transition est alors une configuration clignotante du repère 96.

Dans la configuration allumée de transition, le repère 96 émet une intensité lumineuse qui varie au cours du temps de manière régulière. En particulier, l'intensité lumineuse varie alors à une fréquence prédéterminée.

Ainsi, le dispositif d'indication visuelle 90 est propre à commander, après réception d'un signal représentatif du vecteur de commande élaboré, le passage du repère 96 associé de la configuration éteinte à la configuration allumée de transition. Puis, le dispositif d'indication visuelle 90 est propre à commander, après achèvement du passage de l'ensemble hypersustentateur 28 à la configuration aérodynamique commandée, le passage du repère 96 associé de la configuration allumée de transition à la configuration allumée lumineuse.

Pour ce faire, la centrale de commande 48 est propre à déterminer un achèvement du passage commandé, par exemple à partir des capteurs de position 39, 44 des becs 30 et des volets 32. La centrale de commande 48 est alors configurée pour envoyer un signal représentatif de l'achèvement au dispositif d'indication visuelle 90.

En variante ou en complément, le dispositif d'indication visuelle 90 informe un pilote d'un état transitoire de l'ensemble hypersustentateur 28 par changement de couleur de chaque repère 96.

Pour ce faire, dans la configuration allumée lumineuse, l'intensité lumineuse émise par le repère 96 présente une première couleur prédéterminée. De plus, dans la configuration allumée de transition, le repère 96 émet une intensité lumineuse présentant une deuxième couleur prédéterminée distincte de la première couleur.

Dans un mode de réalisation préféré, le dispositif d'indication visuelle 90 est propre à apporter d'autres informations visuelles complémentaires à un pilote de l'aéronef 12. Pour cela, le dispositif d'indication visuelle 90 est propre à présenter au moins un voyant 100 représentatif d'au moins une information complémentaire.

Dans un premier exemple de réalisation, le dispositif d'indication visuelle 90 est propre à présenter, à destination d'un pilote de l'aéronef 12 et après réception d'un signal représentatif du vecteur de commande élaboré, une indication visuelle représentative d'un sens de passage de la configuration aérodynamique courante à la configuration aérodynamique commandée, à destination d'un pilote de l'aéronef.

Dans l'exemple illustré sur la figure 4, le dispositif d'indication visuelle 90 est propre à présenter au moins deux voyants 100 séparés, chaque voyant 100 étant respectivement associé à un de deux sens de passage possibles.

Le sens de passage est soit associé avec une augmentation de la portance, soit associé avec une baisse de la portance.

Pour ce faire, le dispositif d'indication visuelle 90 est par exemple propre à déterminer ledit sens de passage, par exemple en interrogeant l'historique des configurations aérodynamiques stocké dans la mémoire du dispositif d'indication visuelle 90.

Chaque voyant 100 est par exemple formé au moins par une ouverture dans la platine 92, l'ouverture dessinant un motif représentatif du sens de passage associé au voyant 100, et par un éclairage 102 commandable disposé en-dessous du motif.

Chaque motif dessiné est par exemple une forme de flèche ou de triangle.

Les deux voyants 100 sont alignés de manière parallèle au plan de déplacement de l'organe mobile 50.

Le voyant 100 associé au sens de passage d'augmentation de la portance est plus proche de la première position de l'organe mobile 50 que de la deuxième position. Le voyant 100 associé au sens de passage de baisse de la portance est plus proche de la deuxième position de l'organe mobile 50 que de la première position.

Chaque voyant 100 présente aussi par exemple une indication graphique supplémentaire représentative du sens de passage associé au voyant 100.

Dans l'exemple de la figure 4, chaque indication graphique est soit SF-, soit SF+.

Chaque voyant 100 est propre à être commandé pour passer entre au moins une configuration allumée lumineuse et une configuration éteinte.

La configuration de chaque voyant 100 est par exemple commandée par le processeur du dispositif d'indication visuelle 90.

Dans cet exemple, le dispositif d'indication visuelle 90 est propre à présenter ladite indication visuelle représentative du sens de passage de la configuration aérodynamique courante à la configuration aérodynamique commandée en commandant le passage d'au moins un des voyants 100 de la configuration éteinte à la configuration allumée.

Le voyant commandé de la configuration éteinte à la configuration allumée est en particulier celui associé au sens de passage déterminé.

Dans un deuxième exemple de réalisation complémentaire ou alternatif, chaque voyant 100 est respectivement associé à une des configurations aérodynamiques possibles dans laquelle l'ensemble hypersustentateur 28 est propre à passer à partir de la configuration aérodynamique courante.

Chaque voyant 100 est alors représentatif d'une autorisation ou d'une interdiction de passage dans la configuration aérodynamique possible qui lui est associée.

Pour ce faire, le dispositif d'indication visuelle 90 est propre à recevoir, de la centrale de commande 48, l'autorisation ou l'interdiction de passage à la configuration aérodynamique possible déterminée par la centrale de commande 48 en fonction de signaux reçus des capteurs du système de capteurs 26.

Le dispositif d'indication visuelle 90 présente avantageusement une redondance de chaque voyant 100 de part et d'autre du dispositif de commande manuel 46. La visualisation est ainsi possible pour deux pilotes en même temps.

Dans une variante ou en complément, le dispositif d'indication visuelle 90 comprend un écran, porté par la platine 92. Le processeur propre du dispositif d'indication visuelle 90 est alors adapté pour réaliser l'affichage sur l'écran d'une représentation graphique de chaque signal représentatif du vecteur de commande élaboré.

Dans une autre variante ou complément, le système de commande est connecté à un dispositif d'affichage du cockpit, le dispositif d'affichage du cockpit étant propre à réaliser l'affichage sur l'écran d'une représentation graphique de chaque signal représentatif du vecteur de commande élaboré.

Dans encore une autre variante ou complément, l'ensemble hypersustentateur 28 est dépourvu de bec 30 de bord d'attaque. En d'autres termes, aucune des configurations aérodynamiques différentes, dans lesquelles l'ensemble hypersustentateur 28 est propre à être commandé, ne fait intervenir de bec 30 de bord d'attaque.

Dans encore une autre variante ou complément, au moins un des volets 32 de l'ensemble hypersustentateur 28 est un aileron haute-vitesse (en anglais : flaperon).

L'aileron haute-vitesse combine alors la fonction d'aileron pour contrôler le roulis de l'aéronef, de préférence pendant une phase de croisière de l'aéronef 12, et la fonction de volet pour contrôler la portance, de préférence pendant au moins une phase de décollage ou d'atterrissage.

Dans l'exemple décrit ci-dessus, le dispositif de commande manuel 46 est une manette et l'organe mobile 50 est un levier. Cependant, tout autre dispositif de commande manuel et tout autre organe mobile est envisageable dans le cadre de l'invention. Ainsi, à chaque passage ci-dessus où cela fait sens techniquement, le terme « levier » peut être remplacé par « organe mobile ».

Ainsi, en alternative, le dispositif de commande manuel 46 n'est pas une manette, et comprend par exemple un bouton en tant qu'organe mobile 50.

Le bouton est de préférence un bouton à bascule.

Dans cette alternative, le bouton à bascule est mobile en rotation autour d'un axe de rotation entre la position de repos, la première position et la deuxième position.

Par exemple, le bouton à bascule comprend une première surface d'appui et une deuxième surface d'appui.

Les première et deuxième surfaces d'appui s'étendent respectivement dans deux plans formant un angle entre eux, chacun de ses plans étant sensiblement parallèle à l'axe de rotation.

La première surface d'appui est destinée à être appuyée pour déplacer le bouton à bascule vers la première position.

La deuxième surface d'appui est destinée à être appuyée pour déplacer le bouton à bascule vers la deuxième position.

Avantageusement, dans cette variante, le dispositif de rappel élastique 58 est un ressort de torsion ou un ensemble de ressorts de compression.

Le bouton à bascule est par exemple placé sur une des surfaces latérales du corps de base 52 pour être facilement actionnable par le pouce d'un pilote mettant sa main (par exemple droite) sur le corps de base 52.

Dans encore une autre variante, le dispositif de commande manuel 46 n'est pas une manette, et comprend par exemple une molette en tant qu'organe mobile 50. La molette comprend alors une pièce cylindrique rotative, selon un axe central de la pièce cylindrique.

Un exemple de méthode de commande selon l'invention de l'ensemble hypersustentateur 28 va maintenant être décrit.

La méthode comprend la fourniture du système de commande 10 tel que décrit ci-dessus.

La méthode comprend l'actionnement du dispositif de commande manuel 46 par un pilote de l'aéronef 12, par exemple au cours d'une phase de vol.

Dans un exemple, le dispositif de commande manuel 46 est une manette 46.

L'actionnement est réalisé par déplacement de l'organe mobile 50, c'est-à-dire du levier 50 ou du bouton ou de la molette, par rapport au corps de base 52, depuis la position de repos, jusqu'à atteindre l'une des première et deuxième positions.

Par un tel déplacement, le pilote vise à commander un changement de portance de l'aéronef 12, et donc un changement de configuration aérodynamique.

La méthode comprend alors l'émission d'au moins un signal représentatif de la position atteinte par l'organe mobile 50 par rapport au corps de base 52, lorsque l'organe mobile 50 atteint une des première et deuxième positions, pour faire passer l'ensemble hypersustentateur 28 entre deux des configurations aérodynamiques différentes de portances différentes.

La méthode comprend aussi le rappel élastique de l'organe mobile 50, par le dispositif de rappel élastique 58, depuis la position atteinte jusqu'à la position de repos.

La méthode comprend en particulier alors la commande du passage de l'ensemble hypersustentateur 28 entre deux des configurations aérodynamiques en fonction de la position atteinte par l'organe mobile 50 entre les première et deuxième positions.

Cette commande est par exemple mise en œuvre par la centrale de commande 48 telle que décrite plus haut.

Grâce aux caractéristiques précédemment décrites, il est possible de commander séquentiellement la configuration aérodynamique volets (ou becs/volets le cas échéant) avec un pilotage en transparence de cette configuration par le pilote, tout en évitant une incohérence entre le dispositif de commande manuel, à savoir par exemple la manette 46, et les commandes automatiques issues de la centrale de commande 48.

## Revendications

1. Système de commande (10) d'un ensemble hypersustentateur (28) comprenant au moins un volet (32) de bord de fuite (24) d'un aéronef (12), l'ensemble hypersustentateur (28) étant propre à être commandé dans au moins deux configurations aérodynamiques différentes de portances différentes,
le système de commande (10) comprenant un dispositif de commande manuel (46), actionnable par un pilote de l'aéronef (12), le dispositif de commande manuel (46) comprenant au moins un organe mobile (50) et un corps de base (52), l'organe (50) étant mobile par rapport au corps de base (52) ;
l'organe mobile (50) étant propre à être déplacé par rapport au corps de base (52) au moins entre une position de repos, une première position et une deuxième position distinctes, le dispositif de commande manuel (46) comprenant un dispositif de rappel élastique (58) de l'organe mobile (50) dans la position de repos, la position de repos formant l'unique position stable de l'organe mobile par rapport au corps de base, le dispositif de commande manuel (46) étant propre à émettre au moins un signal représentatif de la position atteinte par l'organe mobile (50) par rapport au corps de base (52), lorsque l'organe mobile (50) atteint une des première et deuxième positions, pour faire passer l'ensemble hypersustentateur (28) entre deux des configurations aérodynamiques,
les première et deuxième positions définissant des positions butoirs du déplacement de l'organe mobile (50) par rapport au corps de base (52) ;
le système de commande (10) comportant une centrale de commande de portance (48), la centrale de commande de portance (48) étant raccordée au dispositif de commande manuel (46), la centrale de commande de portance (48) étant configurée pour élaborer au moins un vecteur de commande de portance de l'ensemble hypersustentateur (28), le vecteur de commande de portance étant élaboré à partir d'au moins une loi de commande de portance, la loi de commande ayant pour données d'entrée au moins chaque signal reçu du dispositif de commande manuel (46).

2. Système de commande (10) selon la revendication 1, dans lequel le système de commande (10) comporte en outre un système (26) de capteurs de paramètres de vol de l'aéronef (12), la centrale de commande de portance (48) étant raccordée aux capteurs du système de capteurs (26), la loi de commande ayant aussi pour données d'entrée des signaux reçus des capteurs du système de capteurs (26).

3. Système de commande (10) selon la revendication 1 ou 2, dans lequel l'ensemble hypersustentateur (28) est propre à être commandé dans au moins trois configurations aérodynamiques différentes présentant des portances différentes croissantes ;
le dispositif de commande manuel (46) étant configuré, lorsque l'organe mobile (50) atteint la première position depuis la position de repos, pour émettre au moins un signal représentatif de l'atteinte de la première position pour faire passer l'ensemble hypersustentateur (28) d'une configuration aérodynamique courante à une autre des configurations aérodynamiques ayant une portance supérieure à la configuration aérodynamique courante ;
et le dispositif de commande manuel (46) étant configuré, lorsque l'organe mobile (50) atteint la deuxième position depuis la position de repos, pour émettre au moins un signal représentatif de l'atteinte de la deuxième position pour faire passer l'ensemble hypersustentateur (28) d'une configuration aérodynamique courante à une autre des configurations aérodynamiques ayant une portance inférieure à la configuration aérodynamique courante.

4. Système de commande (10) selon l'une quelconque des revendications 1 à 3, dans lequel le dispositif de commande manuel (46) comprend un dispositif de verrouillage (72) du levier (50) en position de repos, le dispositif de verrouillage (72) comprenant une encoche (74) définie dans la rainure de guidage (68), l'encoche (74) étant propre à recevoir le doigt de guidage (70) lorsque le levier (50) est dans la position de repos, le dispositif de verrouillage (72) comprenant aussi un système de rappel élastique (76) du doigt de guidage (70) dans l'encoche (74).

5. Système de commande (10) selon l'une quelconque des revendications 1 à 4, dans lequel le dispositif de commande manuel (46) est une manette et l'organe mobile (50) est un levier, le dispositif de commande manuel (46) comprenant, pour chacune des première et deuxième positions, au moins un aimant (78) solidaire de l'un du levier (50) et du corps de base (52), l'aimant (78) étant propre à exercer une force d'attraction sur une région de l'autre du levier (50) et du corps de base (52) ; la force d'attraction étant inférieure à une force de rappel exercée par le dispositif de rappel élastique (58) du levier (50) dans la position de repos.

6. Système de commande (10) selon l'une quelconque des revendications 1 à 5, dans lequel le dispositif de commande manuel (46) comprend un système de détection (82) de l'organe mobile (50) en première position et un système de détection (84) de l'organe mobile (50) en deuxième position, chaque système de détection (82, 84) comprenant une redondance d'au moins deux capteurs de position, chaque capteur de position étant propre à envoyer en parallèle un signal représentatif de la position atteinte par l'organe mobile (50) par rapport au corps de base (52), lorsque l'organe mobile (50) atteint une des première et deuxième positions.

7. Système de commande (10) selon l'une quelconque des revendications 1 à 6, dans lequel le dispositif de commande manuel (46) comprend un système de détection (86) de l'organe mobile (50) en position de repos comprenant au moins un capteur de position, de préférence une redondance d'au moins deux capteurs de position, chaque capteur de position étant propre à envoyer en parallèle un signal représentatif de la position atteinte par l'organe mobile (50) par rapport au corps de base (52), lorsque l'organe mobile (50) atteint la position de repos ;
la centrale de commande (48) étant propre à recevoir et stocker dans une mémoire une succession des signaux représentatifs de la position atteinte par l'organe mobile (50) au cours du temps, et, lorsque la centrale reçoit deux signaux consécutifs du dispositif de commande manuel (46) représentatifs de la même position atteinte par l'organe mobile (50), la centrale de commande (48) est configurée pour ne pas prendre en compte le deuxième signal des deux signaux consécutifs, si aucun signal représentatif de l'atteinte de la position de repos n'est interposé entre les deux signaux consécutifs.

8. Système de commande (10) selon l'une quelconque des revendications 1 à 7, dans lequel la centrale de commande (48) est configurée pour envoyer un signal représentatif du vecteur de commande élaboré au dispositif de commande manuel (46), le dispositif de commande manuel (46) comprenant un dispositif d'indication visuelle (90) propre à présenter, à destination d'un pilote de l'aéronef (12), une indication visuelle représentative de la configuration aérodynamique commandée par le vecteur de commande élaboré.

9. Système de commande (10) selon la revendication 8, dans lequel le dispositif d'indication visuelle (90) du dispositif de commande manuel (46) comprend une platine (92) solidaire du corps de base (52), l'organe mobile (50) faisant saillie par rapport à la platine (92), la platine (92) présentant des repères (96),
chaque repère (96) étant respectivement associé à une des configurations aérodynamiques et étant propre à passer entre au moins une configuration allumée lumineuse et une configuration éteinte,
le dispositif d'indication visuelle (90) étant propre à présenter ladite indication visuelle en commandant le passage du repère (96), associé à la configuration aérodynamique commandée par le vecteur de commande élaboré, à la configuration lumineuse.

10. Système de commande (10) selon la revendication 9, dans lequel la centrale de commande (48) est propre à déterminer un achèvement du passage de l'ensemble hypersustentateur (28) à la configuration aérodynamique commandée, et chaque repère (96) est en outre propre à passer dans une configuration allumée de transition,
le dispositif d'indication visuelle (90) étant propre à commander, après réception d'un signal représentatif du vecteur de commande élaboré, le passage du repère (96) associé de la configuration éteinte à la configuration allumée de transition ;
le dispositif d'indication visuelle (90) étant aussi propre à commander, après achèvement du passage de l'ensemble hypersustentateur (28) à la configuration aérodynamique commandée, le passage du repère (96) associé de la configuration allumée de transition à la configuration allumée lumineuse ;
la configuration allumée de transition étant une configuration clignotante de chaque repère (96) ; et/ou chaque repère (96) est configuré pour émettre une intensité lumineuse présentant une première couleur prédéterminée dans la configuration allumée lumineuse et présentant une deuxième couleur prédéterminée distincte de la première couleur dans la configuration allumée de transition.

11. Système de commande (10) selon l'une quelconque des revendications 8 à 10, dans lequel le dispositif d'indication visuelle (90) est propre à présenter, après réception d'un signal représentatif du vecteur de commande élaboré, une indication visuelle représentative d'un sens de passage de la configuration aérodynamique courante à la configuration aérodynamique commandée, à destination d'un pilote de l'aéronef (12), par exemple en commandant le passage d'au moins un voyant d'une configuration éteinte à une configuration allumée.

12. Système de commande (10) selon l'une quelconque des revendications 1 à 11, dans lequel l'ensemble hypersustentateur (28) est propre à être commandé pour passer à partir d'une configuration aérodynamique courante à au moins une autre configuration aérodynamique possible,
le système de commande (10) comporte en outre un système de capteurs (26) de paramètres de vol de l'aéronef (12), la centrale de commande de portance (48) étant raccordée aux capteurs du système de capteurs (26), la centrale de commande (48) étant configurée pour déterminée, pour chaque configuration aérodynamique possible, une autorisation ou une interdiction de passage à la configuration aérodynamique possible en fonction de signaux reçus des capteurs du système de capteurs (26) ;
le dispositif de commande manuel (46) comprenant un dispositif d'indication visuelle (90) propre à présenter, à destination d'un pilote de l'aéronef (12) et pour chaque configuration aérodynamique possible, au moins un voyant (100) représentatif de l'autorisation ou de l'interdiction déterminée de passage à la configuration aérodynamique possible.

13. Méthode de commande d'un ensemble hypersustentateur (28) comprenant au moins un volet (32) de bord de fuite (24) d'un aéronef (12), comprenant les étapes suivantes :
- fourniture du système de commande (10) selon l'une quelconque des revendications 1 à 12 ;
- actionnement du dispositif de commande manuel (46) par un pilote de l'aéronef (12), par déplacement de l'organe mobile (50) par rapport au corps de base (52), depuis la position de repos, jusqu'à atteindre l'une des première et deuxième positions ;
- émission d'au moins un signal représentatif de la position atteinte par l'organe mobile par rapport au corps de base, lorsque l'organe mobile atteint une des première et deuxième positions, pour faire passer l'ensemble hypersustentateur (28) entre deux des configurations aérodynamiques ; et
- rappel élastique de l'organe mobile (50), par le dispositif de rappel élastique (58), depuis la position atteinte jusqu'à la position de repos.

## Patentansprüche

1. Steuersystem (10) für eine Hochauftriebsanordnung (28), umfassend mindestens einer Klappe (32) an der Hinterkante (24) eines Luftfahrzeugs (12), wobei die Hochauftriebsanordnung (28) geeignet ist, um in mindestens zwei verschiedenen aerodynamischen Konfigurationen mit unterschiedlichem Auftrieb gesteuert zu werden,
das Steuersystem (10) umfassend eine manuelle Steuerungsvorrichtung (46), die von einem Piloten des Luftfahrzeugs (12) betätigbar ist, die manuelle Steuerungsvorrichtung (46) umfassend mindestens ein bewegbares Element (50) und einen Grundkörper (52), wobei das Element (50) in Bezug auf den Grundkörper (52) bewegbar ist;
wobei das bewegbare Element (50) geeignet ist, um in Bezug auf den Grundkörper (52) zumindest zwischen einer Ruheposition, einer ersten Position und einer zweiten getrennten Position bewegt zu werden, die manuelle Steuerungsvorrichtung (46) umfassend eine elastische Rückholvorrichtung (58) des bewegbaren Elements (50) in die Ruheposition, wobei die Ruheposition die einzige stabile Position des bewegbaren Elements in Bezug auf den Grundkörper bildet, die manuelle Steuerungsvorrichtung (46) geeignet ist, um mindestens ein Signal auszusenden, das repräsentativ für die Position ist, die das bewegbare Element (50) in Bezug auf den Grundkörper (52) erreicht, wenn das bewegbare Element (50) eine von der ersten und der zweiten Position erreicht, um die Hochauftriebsanordnung (28) zwischen zwei der aerodynamischen Konfigurationen zu bewegen,
wobei die erste und die zweite Position Anschlagpositionen der Bewegung des bewegbaren Elements (50) in Bezug auf den Grundkörper (52) definieren;
das Steuersystem (10) umfassend eine Auftriebssteuerzentrale (48), wobei die Auftriebssteuerzentrale (48) an die manuellen Steuerungsvorrichtung (46) angeschlossen ist, wobei die Auftriebssteuerzentrale (48) konfiguriert ist, um mindestens einen Auftriebssteuerungsvektor für die Hochauftriebsanordnung (28) zu erarbeiten, wobei der Auftriebssteuerungsvektor anhand mindestens eines Auftriebssteuerungsgesetzes erarbeitet wird, wobei das Steuergesetz als Eingangsdaten mindestens jedes von der manuellen Steuerungsvorrichtung (46) erhaltene Signal aufweist.

2. Steuersystem (10) nach Anspruch 1, wobei das Steuersystem (10) ferner ein Sensorsystem (26) der Flugparameter des Luftfahrzeugs (12) umfasst, die Auftriebssteuerzentrale (48) an die Sensoren des Sensorsystems (26) angeschlossen ist, wobei das Steuergesetz als Eingangsdaten auch Signale aufweist, die von den Sensoren des Sensorsystems (26) erhalten werden.

3. Steuersystem (10) nach Anspruch 1 oder 2, wobei die Hochauftriebsanordnung (28) geeignet ist, um in mindestens drei verschiedenen aerodynamischen Konfigurationen gesteuert zu werden, die unterschiedliche, zunehmende Auftriebe aufweisen;
die manuelle Steuerungsvorrichtung (46) konfiguriert ist, um, wenn das bewegbare Element (50) die erste Position aus der Ruheposition heraus erreicht, mindestens ein Signal auszugeben, dass das Erreichen der ersten Position darstellt, um die Hochauftriebsanordnung (28) von einer aktuellen aerodynamischen Konfiguration in eine andere der aerodynamischen Konfigurationen zu überführen, die einen größeren Auftrieb als die aktuelle aerodynamische Konfiguration aufweist;
und die manuelle Steuerungsvorrichtung (46) konfiguriert ist, um, wenn das bewegbare Element (50) die zweite Position aus der Ruheposition heraus erreicht, mindestens ein Signal auszugeben, dass das Erreichen der zweiten Position darstellt, um die Hochauftriebsanordnung (28) von einer aktuellen aerodynamischen Konfiguration in eine andere der aerodynamischen Konfigurationen mit einem geringeren Auftrieb als die aktuelle aerodynamische Konfiguration zu überführen.

4. Steuersystem (10) nach einem der Ansprüche 1 bis 3, wobei die manuelle Steuerungsvorrichtung (46) eine Verriegelungsvorrichtung (72) des Hebels (50) in der Ruheposition umfasst, die Verriegelungsvorrichtung (72) umfassend eine Kerbe (74), die in der Führungsnut (68) definiert ist, wobei die Kerbe (74) geeignet ist, um den Führungsfinger (70) aufzunehmen, wenn der Hebel (50) in der Ruheposition ist, die Verriegelungsvorrichtung (72) auch umfassend ein elastisches Rückholsystem (76) für den Führungsstift (70) in der Kerbe (74).

5. Steuersystem (10) nach einem der Ansprüche 1 bis 4, wobei die manuelle Steuerungsvorrichtung (46) ein Joystick ist und das bewegbare Element (50) ein Hebel ist, die manuelle Steuerungsvorrichtung (46) umfassend für jede von der ersten und der zweiten Position mindestens einen Magneten (78), der fest mit einem von dem Hebel (50) und dem Grundkörper (52) verbunden ist, wobei der Magnet (78) geeignet ist, um eine Anziehungskraft auf einen Bereich des anderen von dem Hebel (50) und dem Grundkörper (52) auszuüben; wobei die Anziehungskraft geringer ist als eine Rückholkraft, die von der elastischen Rückholvorrichtung (58) des Hebels (50) in der Ruheposition ausgeübt wird.

6. Steuersystem (10) nach einem der Ansprüche 1 bis 5, wobei die manuelle Steuerungsvorrichtung (46) ein System zum Erfassen (82) des bewegbaren Elements (50) in der ersten Position und ein System zum Erfassen (84) des bewegbaren Elements (50) in der zweiten Position umfasst, jedes Erfassungssystem (82, 84) eine Redundanz von mindestens zwei Positionssensoren umfasst, wobei jeder Positionssensor geeignet ist, um parallel ein Signal zu senden, das repräsentativ für die durch das bewegbare Element (50) in Bezug auf den Grundkörper (52) erreichte Position ist, wenn das bewegbare Element (50) eine von der ersten und der zweiten Position erreicht.

7. Steuersystem (10) nach einem der Ansprüche 1 bis 6, wobei die manuelle Steuerungsvorrichtung (46) ein System (86) zum Erfassen des bewegbaren Elements (50) in der Ruheposition umfasst, umfassend mindestens einen Positionssensor, vorzugsweise eine Redundanz von mindestens zwei Positionssensoren, wobei jeder Positionssensor geeignet ist, um parallel ein Signal zu senden, das repräsentativ für die durch das bewegbare Element (50) in Bezug auf den Grundkörper (52) erreichte Position ist, wenn das bewegbare Element (50) die Ruheposition erreicht;
wobei die Steuerzentrale (48) geeignet ist, um eine Abfolge der Signale, die repräsentativ für die von dem bewegbaren Element (50) im Lauf der Zeit erreichte Position sind, zu erhalten und in einem Speicher zu speichern, und, wenn die Zentrale zwei aufeinanderfolgende Signale der manuellen Steuerungsvorrichtung (46) erhält, die repräsentativ für dieselbe von dem bewegbaren Element (50) erreichte Position sind, die Steuerzentrale (48) konfiguriert ist, um das zweite Signal der zwei aufeinanderfolgenden Signale nicht zu berücksichtigen, wenn kein für das Erreichen der Ruheposition repräsentatives Signal zwischen die zwei aufeinanderfolgenden Signale eingefügt wird.

8. Steuersystem (10) nach einem der Ansprüche 1 bis 7, wobei die Steuerzentrale (48) konfiguriert ist, um ein Signal, das repräsentativ für den erarbeiteten Befehlsvektor ist, an die manuelle Steuerungsvorrichtung (46) zu senden, die manuelle Steuerungsvorrichtung (46) umfassend eine visuelle Anzeigevorrichtung (90), die geeignet ist, um einem Piloten des Luftfahrzeugs (12) eine visuelle Anzeige zu präsentieren, die repräsentativ für die aerodynamische Konfiguration ist, die durch den erarbeiteten Steuerungsvektor gesteuert wird.

9. Steuersystem (10) nach Anspruch 8, wobei die visuelle Anzeigevorrichtung (90) der manuellen Steuerungsvorrichtung (46) eine Platine (92) umfasst, die fest mit dem Grundkörper (52) verbunden ist, das bewegbare Element (50) von der Platine (92) hervorsteht, die Platine (92) Markierungen (96) aufweist,
jede Markierung (96) jeweils mit einer der aerodynamischen Konfigurationen assoziiert und geeignet ist, um zwischen mindestens einer leuchtenden eingeschalteten Konfiguration und einer ausgeschalteten Konfiguration zu wechseln,
die visuelle Anzeigevorrichtung (90) geeignet ist, die visuelle Anzeige zu präsentieren, indem sie den Übergang von der Markierung (96), die mit der aerodynamischen Konfiguration assoziiert ist, die durch den erarbeiteten Steuerungsvektor gesteuert wird, zu der leuchtenden Konfiguration zu steuern.

10. Steuersystem (10) nach Anspruch 9, wobei die Steuerzentrale (48) geeignet ist, um ein Erreichen des Übergangs der Hochauftriebsanordnung (28) in die gesteuerte aerodynamische Konfiguration zu bestimmen, und jede Markierung (96) ferner geeignet ist, um in eine eingeschaltete Übergangskonfiguration überzugehen,
wobei die visuelle Anzeigevorrichtung (90) geeignet ist, um nach Erhalten eines Signals, das repräsentativ für den erarbeiteten Steuerungsvektor ist, den Übergang der assoziierten Markierung (96) von der ausgeschalteten Konfiguration in die eingeschaltete Übergangskonfiguration zu steuern;
wobei die visuelle Anzeigevorrichtung (90) auch geeignet ist, um nach Erreichen des Übergangs der Hochauftriebsanordnung (28) in die gesteuerte aerodynamische Konfiguration den Übergang der assoziierten Markierung (96) von der eingeschalteten Übergangskonfiguration in die leuchtende eingeschaltete Konfiguration zu steuern;
wobei die leuchtende Übergangskonfiguration eine blinkende Konfiguration jeder Markierung (96) ist; und/oder jede Markierung (96) konfiguriert ist, um eine Lichtintensität zu emittieren, die eine erste vorbestimmte Farbe in der leuchtenden Einschaltkonfiguration und eine zweite vorbestimmte Farbe, die sich von der ersten Farbe in der leuchtenden Übergangskonfiguration unterscheidet, aufweist.

11. Steuersystem (10) nach einem der Ansprüche 8 bis 10, wobei die visuelle Anzeigevorrichtung (90) geeignet ist, um nach Erhalten eines Signals, das repräsentativ für den erarbeiteten Steuerungsvektor ist, eine visuelle Anzeige, die repräsentativ für eine Richtung des Übergangs von der aktuellen aerodynamischen Konfiguration zu der gesteuerten aerodynamischen Konfiguration ist, für einen Piloten des Luftfahrzeugs (12) zu präsentieren, beispielsweise durch Steuern des Übergangs mindestens einer Anzeige von einer ausgeschalteten Konfiguration in eine eingeschaltete Konfiguration.

12. Steuersystem (10) nach einem der Ansprüche 1 bis 11, wobei die Hochauftriebsanordnung (28) geeignet ist, um gesteuert zu werden, um von einer aktuellen aerodynamischen Konfiguration in mindestens eine andere mögliche aerodynamische Konfiguration überzugehen,
das Steuersystem (10) ferner ein Sensorsystem (26) der Flugparameter des Luftfahrzeugs (12) umfasst, die Auftriebssteuerzentrale (48) an die Sensoren des Sensorsystems (26) angeschlossen ist, wobei die Steuerzentrale (48) konfiguriert ist, um für jede mögliche aerodynamische Konfiguration eine Erlaubnis oder ein Verbot für den Übergang zu der möglichen aerodynamischen Konfiguration abhängig von Signalen zu bestimmen, die von den Sensoren des Sensorsystems (26) erhalten werden;
die manuelle Steuerungsvorrichtung (46) eine visuelle Anzeigevorrichtung (90) umfasst, die geeignet ist, um für einen Piloten des Luftfahrzeugs (12) und für jede mögliche aerodynamische Konfiguration mindestens eine Anzeige (100) zu präsentieren, die repräsentativ für die bestimmte Erlaubnis oder das bestimmte Verbot des Übergangs zu der möglichen aerodynamischen Konfiguration ist.

13. Verfahren zur Steuerung einer Hochauftriebsanordnung (28), umfassend mindestens eine Klappe (32) an der Hinterkante (24) eines Luftfahrzeugs (12), umfassend die folgenden Schritte:
- Bereitstellen des Steuersystems (10) nach einem der Ansprüche 1 bis 12;
- Betätigen der manuellen Steuerungsvorrichtung (46) durch einen Piloten des Luftfahrzeugs (12), indem das bewegbare Element (50) in Bezug auf den Grundkörper (52) aus der Ruheposition in eine von der ersten und der zweiten Position bewegt wird;
- Senden mindestens eines Signals, das repräsentativ für die Position ist, die das bewegbare Element in Bezug auf den Grundkörper erreicht, wenn das bewegbare Element eine von der ersten und der zweiten Position erreicht, um die Hochauftriebsanordnung (28) zwischen zwei der aerodynamischen Konfigurationen zu bewegen; und
- elastisches Rückholen des bewegbaren Elements (50) durch die elastische Rückholvorrichtung (58) aus der erreichten Position in die Ruheposition.

## Claims

1. A control system (10) for a high lift assembly (28) comprising at least one flap (32) of a trailing edge (24) of an aircraft (12), the high lift assembly (28) being controllable into at least two different aerodynamic configurations of different lift,
the control system (10) comprising a manual control device (46) operable by an aircraft pilot (12), the manual control device (46) comprising at least one movable member (50) and a base body (52), the movable member (50) being movable relative to the base body (52);
the movable member (50) being suitable for being moved relative to the base body (52) at least between a rest position and a distinct first position and second position, the manual control device (46) comprising a device (58) for resiliently returning the movable member (50) to the rest position, the manual control device (46) being suitable for emitting at least one signal representative of the position reached by the movable member (50) with respect to the base body (52), when the movable member (50) reaches either the first position or the second position, in order to cause the high lift assembly (28) to switch between two of the aerodynamic configurations
**characterised in that** the first and second positions define stop positions for the movement of the movable member (50) relative to the base body (52);
and **in that** the control system (10) comprises a lift control unit (48), the lift control unit (48) being connected to the manual control device (46), the lift control unit (48) being configured to generate at least one lift control vector for the high lift assembly (28), the lift control vector being generated from at least one lift control law, the control law having as input data at least each signal received from the manual control device (46).

2. The control system (10) according to claim 1, wherein the control system (10) further comprises a sensor system (26) for flight parameters of the aircraft (12), the lift control unit (48) being connected to the sensors of the sensor system (26), the control law also having, as input data, signals received from sensors of the sensor system (26).

3. The control system (10) according to claim 1 or 2, wherein the high lift assembly (28) is adapted to be controlled into at least three different aerodynamic configurations of increasing lift;
the manual control device (46) being configured, when the movable member (50) reaches the first position from the rest position, to output at least one signal representative of the reaching of the first position to change the high lift assembly (28) from a current aerodynamic configuration to another of the aerodynamic configurations having a lift greater than the current aerodynamic configuration;
and the manual control device (46) being configured, when the movable member (50) reaches the second position from the rest position, to output at least one signal representative of the reaching of the second position to change the high lift assembly (28) from a current aerodynamic configuration to another of the aerodynamic configurations having a lift less than the current aerodynamic configuration.

4. The control system (10) according to any one of claims 1 to 3, wherein the manual control device (46) comprises a locking device (72) for locking the lever (50) in the rest position, the locking device (72) comprising a notch (74) defined in the guide groove (68), the notch (74) being adapted to receive the guide finger (70) when the lever (50) is in the rest position, the locking device (72) also comprising a system (76) for resiliently returning the guide finger (70) into the notch (74).

5. The control system (10) according to any one of claims 1 to 4, wherein the manual control device (46) is a joystick and the movable member (50) is a lever, the manual control device (46) comprising, for each of the first and second positions, at least one magnet (78) integral with either the lever (50) or the base body (52), the magnet (78) being adapted to exert an attractive force on a region of the other of the lever (50) and the base body (52); the attractive force being less than a return force exerted by the resilient return device (58) of the lever (50) toward the rest position.

6. The control system (10) according to any one of claims 1 to 5, wherein the manual control device (46) comprises a detection system for detecting (82) the movable member (50) in a first position and a detection system for detecting (84) the movable member (50) in a second position, each detection system (82, 84) comprising a redundancy of at least two position sensors, each position sensor being capable of sending in parallel a signal representative of the position reached by the movable member (50) with respect to the base body (52), when the movable member (50) reaches either the first position or the second position.

7. The control system (10) according to any one of claims 1 to 6, wherein the manual control device (46) comprises a rest detection system (86) for detecting the movable member (50) in the rest position, the rest detection system (86) comprising at least one position sensor, preferably a redundancy of at least two position sensors, each position sensor being capable of sending in parallel a signal representative of the position reached by the movable member (50) with respect to the base body (52), when the movable member (50) reaches the rest position;
the control unit (48) being capable of receiving and storing in a memory a succession of signals representative of the position reached by the movable member (50) over time, and, when the control unit receives two consecutive signals from the manual control device (46) representative of the same position reached by the movable member (50), the control unit (48) is configured so as to disregard the second signal of the two consecutive signals, if no signal representative of reaching the rest position is interposed between the two consecutive signals.

8. The control system (10) according to any one of claims 1 to 7, wherein the control unit (48) is configured to send a signal representative of the generated control vector to the manual control device (46), the manual control device (46) comprising a visual indication device (90) adapted to present, to a pilot of the aircraft (12), a visual indication representative of the aerodynamic configuration commanded by the generated control vector.

9. The control system (10) according to claim 8, wherein the visual indication device (90) of the manual control device (46) comprises a plate (92) rigidly connected to the base body (52), the movable member (50) protruding from the plate (92), the plate (92) having markers (96),
each marker (96) being respectively associated with one of the aerodynamic configurations and being capable of switching between at least one illuminated on configuration and one off configuration,
the visual indication device (90) being adapted to present said visual indication by controlling the passage of the marker (96), associated with the aerodynamic configuration commanded by the generated control vector, to the illuminated configuration.

10. The control system (10) according to claim 9, wherein the control unit (48) is adapted to determine whether the high lift assembly (28) has finished switching to the commanded aerodynamic configuration, and each marker (96) is further adapted to switch into a transitional on configuration,
the visual indication device (90) being adapted to control, after receiving a signal representative of the generated control vector, the transition of the associated marker (96) from the off configuration to the transitional on configuration;
the visual indication device (90) being adapted to command, after the high-lift assembly (28) has finished switching to the commanded aerodynamic configuration, the switching of the associated marker (96) from the transitional on configuration to the illuminated on configuration;
wherein the transitional on configuration is a flashing configuration of each marker (96), and/or each marker (96) is configured to emit an light intensity having a first predetermined colour in the illuminated on configuration and having a second predetermined colour distinct from the first colour in the transitional on configuration.

11. The control system (10) according to any one of claims 8 to 10, wherein the visual indication device (90) is adapted to present, after receiving a signal representative of the generated control vector, a visual indication representative of a direction of passage from the current aerodynamic configuration to the commanded aerodynamic configuration, to a pilot of the aircraft (12), for example by commanding the switching of at least one light from an off configuration to an on configuration.

12. The control system (10) according to any one of claims 1 to 11, wherein the high-lift assembly (28) is adapted to be controlled to switch from a current aerodynamic configuration to at least one other possible aerodynamic configuration,
the control system (10) further comprises a sensor system (26) for flight parameters of the aircraft (12), the lift control unit (48) being connected to sensors of the sensor system (26), the lift control unit (48) being configured to determine, for each possible aerodynamic configuration, an authorisation or prohibition of switching to the possible aerodynamic configuration as a function of signals received from the sensors of the sensor system (26);
the manual control device (46) comprising a visual indication device (90) adapted to present, to a pilot of the aircraft (12) and for each possible aerodynamic configuration, at least one light (100) representative of the determined authorisation or prohibition of switching to the possible aerodynamic configuration.

13. Method for controlling a high lift assembly (28) comprising at least one flap (32) of a trailing edge (24) of an aircraft (12), comprising the following steps:
- providing the control system (10) according to any one of claims 1 to 12;
- operating the manual control device (46) by a pilot of the aircraft (12), by moving the movable member (50) relative to the base body (52) from the rest position until one of the first and second positions is reached;
- emitting at least one signal representative of the position reached by the movable member with respect to the base body, when the movable member reaches one of the first and second positions, to cause the high lift assembly (28) to switch between two of the aerodynamic configurations; and
- elastically returning the movable member (50), by means of the device (58), from the reached position to the rest position.
